# DEMANDE DE BREVET EUROPEEN

(11) **EP 2 447 158 A2**
(43) Date de publication de la demande: **02.05.2012**
(21) Numéro de dépôt: 11306374.7
(22) Date de dépôt: 25.10.2011
(51) Int. Cl.: B64D 29/06, B64D 29/08

(54) **Capot d'aéronef incorporant des moyens pour limiter les phénomènes d'écope de type magnétique**

(30) Priorité: 26.10.2010 FR 1058783
(71) Demandeur: Airbus Opérations SAS, 31060 Toulouse (FR)
(72) Inventeur: Porte, Alain, 31770 Colomiers (FR); Chelin, Frédéric, 32430 Encausse (FR); Bertin, Etienne, 31400 Toulouse (FR)
(74) Mandataire: Fantin, Laurent

(57) **Abrégé**

L'objet de l'invention est une nacelle d'aéronef comprenant au niveau de sa paroi extérieure un capot (14) mobile par rapport au reste de la nacelle de manière à obturer ou dégager une ouverture, ledit capot (14) comportant une articulation par rapport au reste de la nacelle et des moyens de verrouillage/déverrouillage distant du bord amont (18) dudit capot (14) qui comprend des moyens pour limiter l'apparition des phénomènes d'écope, caractérisée en ce que lesdits moyens (37) pour limiter l'apparition du phénomène d'écope comprennent au moins un couple électromagnétique dont un élément (38) est solidaire du reste de la nacelle (10) et dont l'autre élément (40) est solidaire du capot (14), au moins l'un des deux éléments (38, 40) émettant un champs magnétique générant un effort d'attraction sur l'autre élément et en ce que les faces des deux éléments (38, 40) du couple électromagnétique plaquées l'une contre l'autre sont disposées dans des plans ayant au moins une composante selon la direction radiale.

## Description

La présente invention se rapporte à un capot d'aéronef incorporant des moyens pour limiter les phénomènes d'écope de type magnétique.

Un ensemble propulsif d'aéronef comprend une nacelle dans laquelle est disposée de manière sensiblement concentrique une motorisation reliée par l'intermédiaire d'un mât au reste de l'aéronef.

La nacelle comprend une paroi intérieure délimitant un conduit avec une entrée d'air à l'avant, une première partie du flux d'air entrant, appelée flux primaire, traversant la motorisation pour participer à la combustion, la seconde partie du flux d'air, appelée flux secondaire, étant entraînée par une soufflante et s'écoulant dans un conduit annulaire délimité par la paroi intérieure de la nacelle et la paroi extérieure de la motorisation.

La nacelle comprend également une paroi extérieure de section sensiblement circulaire, qui s'étend depuis l'entrée d'air jusqu'à la sortie arrière, constituée par la juxtaposition de plusieurs éléments, une entrée d'air sensiblement rigide à l'avant suivie de portes de nacelle, également appelées capots.

L'entrée d'air est rigide en raison de ses formes courbes et des nombreux renforts pour résister aux efforts générés par les écoulements aérodynamiques ou aux éventuels chocs.

Les capots sont rendus mobiles pour autoriser l'accès à la motorisation placée à l'intérieur de la nacelle. Ces capots sont articulés au reste de la nacelle de différentes manières en fonction de la cinématique retenue et s'étendent depuis le haut de la nacelle, à proximité de l'ancrage du mât, jusqu'au bas de la nacelle et ont une forme demi-cylindrique.

Un capot comprend généralement une tôle avec des raidisseurs sur la surface intérieure pour lui conférer une rigidité relative. La surface extérieure lisse du capot est sensée rester dans le prolongement de la surface extérieure des autres éléments, notamment de l'entrée d'air, lorsque le capot est en position fermée.

Des moyens de verrouillage sont prévus au niveau du bord inférieur du capot afin de maintenir le capot en position fermée.

En complément, le cadre de l'ouverture obturée par le capot comprend sur au moins une partie de sa périphérie une surface de contact contre laquelle peut prendre appui le capot de manière à garder sa surface extérieure toujours dans le prolongement de celle de l'entrée d'air.

Eventuellement, la surface de contact du cadre peut comprendre un élément déformable tel qu'un joint comprimable.

Pour assurer un positionnement du capot par rapport au reste de la nacelle selon l'axe longitudinal qui correspond également à l'axe de pivotement du capot, il est possible de prévoit au niveau des bords amont et aval (perpendiculaires à l'axe de pivotement) du cadre de l'ouverture des formes complémentaires aux formes prévues au niveau des bords amont et aval du capot. Ainsi, le bord amont (et/ou aval) du cadre comprend une gorge et le bord amont (et/ou aval) du capot comprend une forme en saillie qui se loge dans la gorge prévue au niveau du cadre. Ces éléments permettent de guider le capot lors de sa fermeture de manière à ce qu'il soit correctement positionné selon l'axe de pivotement lorsqu'il est fermé.

Durant le vol, compte tenu de leurs rigidités relatives, les capots peuvent se déformer, notamment selon la direction radiale si bien que de l'air peut pénétrer sous lesdits capots à l'intérieur de la nacelle au niveau de la jonction avec l'entrée d'air. Ce phénomène d'écope réduit les performances aérodynamiques de l'aéronef, notamment en augmentant la traînée, ce qui se traduit par une surconsommation en carburant.

Afin de limiter ce phénomène, une solution consiste à augmenter le nombre de raidisseurs prévus au niveau des capots. Cependant, cette solution va à l'encontre du résultat souhaité dans la mesure où l'ajout de raidisseurs contribue à augmenter la masse embarquée et donc la consommation de l'aéronef.

Selon une autre alternative, il est possible de prévoir un système de ceinture comme illustré dans la demande de brevet F -2.933.957.

La présente invention propose une alternative aux solutions de l'art antérieur qui limite les phénomènes d'écope, sans augmenter significativement la masse embarquée et les coûts de maintenance.

A cet effet, l'invention a pour objet une nacelle d'aéronef comprenant au niveau de sa paroi extérieure un capot mobile par rapport au reste de la nacelle de manière à obturer ou dégager une ouverture, ledit capot comportant une articulation par rapport au reste de la nacelle et des moyens de verrouillage/déverrouillage distant du bord amont dudit capot qui comprend des moyens pour limiter l'apparition des phénomènes d'écope, caractérisée en ce que lesdits moyens pour limiter l'apparition du phénomène d'écope comprennent au moins un couple électromagnétique dont un élément est solidaire du reste de la nacelle et dont l'autre élément est solidaire du capot, au moins l'un des deux éléments émettant un champs magnétique générant un effort d'attraction sur l'autre élément et en ce que les faces des deux éléments du couple électromagnétique plaquées l'une contre l'autre sont disposées dans des plans ayant au moins une composante selon la direction radiale.

Cet agencement permet de limiter l'apparition du phénomène d'écope même si le capot n'est pas correctement fermé.

D'autres caractéristiques et avantages ressortiront de la description qui va suivre de l'invention, description donnée à titre d'exemple uniquement, en regard des dessins annexés sur lesquels :
- la figure 1 est une vue en perspective illustrant une nacelle d'aéronef,
- les figures 2 à 5 sont des coupes illustrant des variantes de l'invention,
- la figure 6A est une coupe illustrant une autre variante de l'invention dans un premier état fermé,
- la figure 6B est une coupe illustrant la variante de la figure 6A dans un deuxième état dit ouvert, et
- la figure 6C est une coupe illustrant la variante de la figure 6A dans un troisième état dit « mal fermé ».

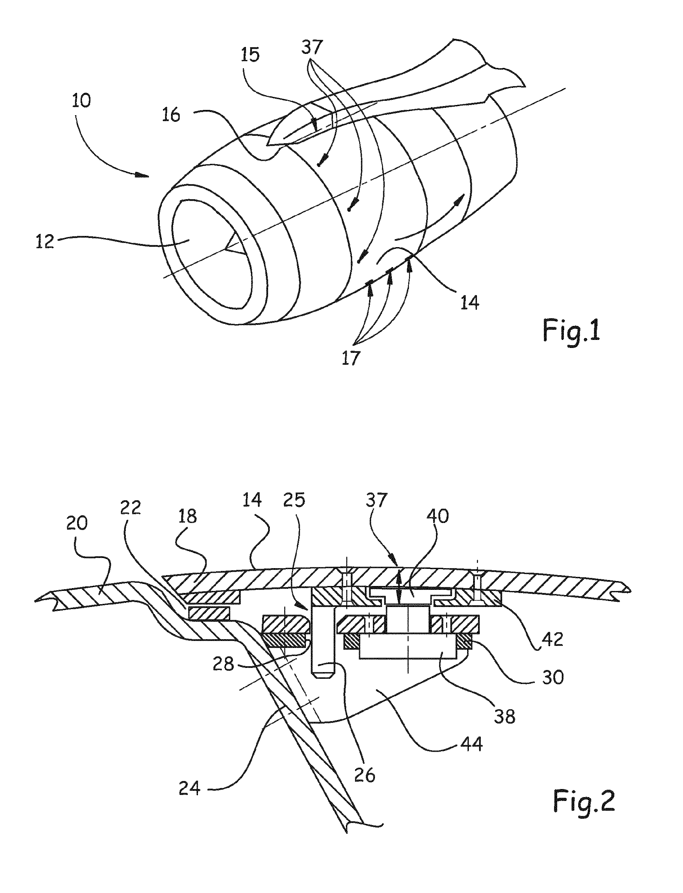

Sur la figure 1, on a représenté une nacelle. 10 contenant une motorisation et reliée au reste de l'aéronef par un mât. Elle comprend une paroi extérieure de section sensiblement circulaire, qui s'étend depuis une entrée d'air 12 jusqu'à une sortie arrière, constituée par la juxtaposition de plusieurs éléments, l'entrée d'air 12 sensiblement rigide à l'avant suivie de portes 14 de nacelle, également appelées capots.

Les capots 14 comprennent une articulation 15 par rapport au reste de la nacelle pour les rendre mobiles et autoriser l'accès à la motorisation. Ainsi, ces capots 14 permettent d'obturer ou de dégager une ouverture délimitée par un cadre.

Ces capots 14 sont articulés au reste de la nacelle de différentes manières en fonction de la cinématique retenue et s'étendent depuis le haut de la nacelle, à proximité de l'ancrage du mât, jusqu'au bas de la nacelle et ont une forme demi-cylindrique.

Un capot 14 comprend généralement une tôle avec des raidisseurs sur la surface intérieure pour lui conférer une rigidité relative. La surface extérieure lisse du capot est sensée rester dans le prolongement de la surface extérieure des autres éléments, notamment de l'entrée d'air, lorsque le capot est en position fermée.

Pour la suite de la description, la direction longitudinale correspond à la direction de l'axe de rotation de la soufflante de la motorisation. Un plan médian vertical correspond à un plan vertical contenant l'axe longitudinal.

Une direction radiale est une direction perpendiculaire à la direction longitudinale.

Un plan tangentiel en un point donné correspond à un plan perpendiculaire à la direction radiale passant par ledit point.

Les positions amont et aval sont définies en référence à la direction de l'écoulement des gaz à l'intérieur de la motorisation.

Selon un mode de réalisation, une nacelle comprend deux capots 14 symétriques par rapport au plan médian vertical de la nacelle, chaque capot pouvant pivoter autour d'un axe de rotation 16 orienté selon la direction longitudinale et disposé à proximité du mât (approximativement à 12h).

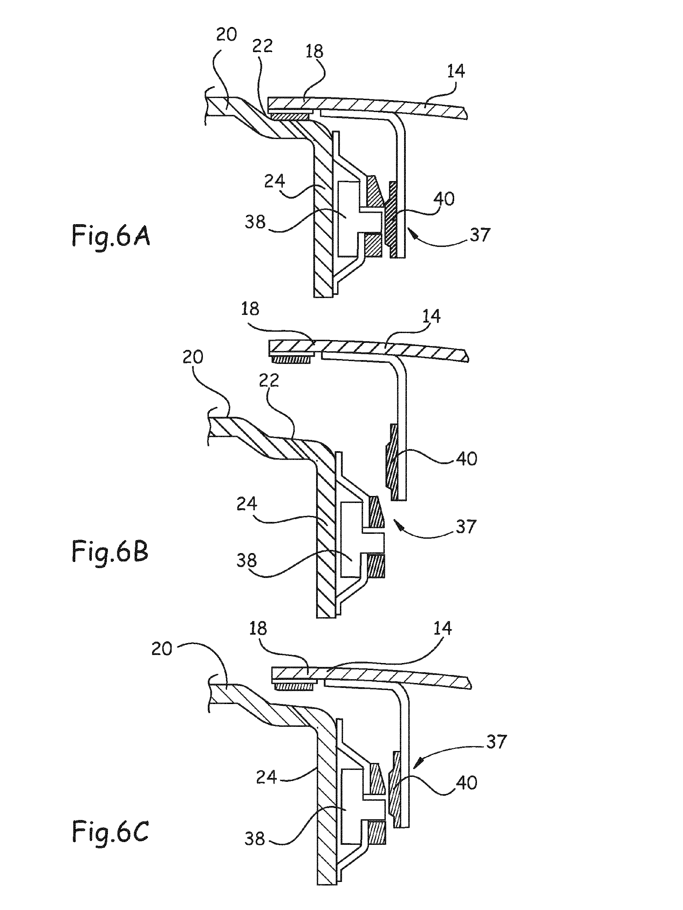

Ainsi, les capots peuvent occuper plusieurs états, à savoir un état fermé (figure 6A) dans lequel les surfaces extérieures des capots sont disposées dans le prolongement des surfaces des parties de la nacelle en amont et aval des capots et un état ouvert (figure 6B) dans lequel le capot à pivoter et autorise l'accès à la motorisation.

Les bords inférieurs des capots sont sensiblement parallèles aux axes de pivotement 16 et sont reliés entre eux à l'état fermé par des moyens de verrouillage/déverrouillage 17.

La nacelle, le ou les capots, l'articulation du capot par rapport au reste de la nacelle, les moyens de verrouillage/déverrouillage du capot ne sont pas plus décrits car ils sont connus de l'homme du métier.

Les bords amont et aval du capot relient les bords inférieur et supérieur du capot.

Ces bords amont et aval coopèrent avec les bords amont et aval du cadre de l'ouverture. Des moyens de positionnement et de guidage peuvent être prévus pour positionner correctement le bord amont (ou aval) du capot avec le bord amont (ou aval) de l'ouverture par exemple une gorge en V au niveau du bord de l'ouverture qui coopère avec une rainure prévue au niveau du bord du capot ou des couteaux prévus au niveau du bord du capot qui coopèrent avec des logements prévus au niveau du bord de l'ouverture.

Sur les figures 2 à 5, 6A, 6B et 6C, on a représenté en coupe dans un plan contenant l'axe longitudinal de la motorisation, le bord amont 18 du capot qui coopère avec le bord amont 20 de l'ouverture. Ce dernier comprend un décrochement 22 permettant de loger l'extrémité du bord 18 du capot de manière à ce que la surface extérieure du capot soit disposée dans le prolongement de la surface extérieure du reste de la nacelle.

L'ouverture est délimitée par un cadre comprenant une paroi 24 au niveau du bord amont qui est perpendiculaire ou inclinée par rapport aux surfaces extérieures de la nacelle.

Selon des variantes illustrées sur les figures 2, 3 et 4, le capot 14 comprend des moyens 25 pour le positionner par rapport à l'ouverture.

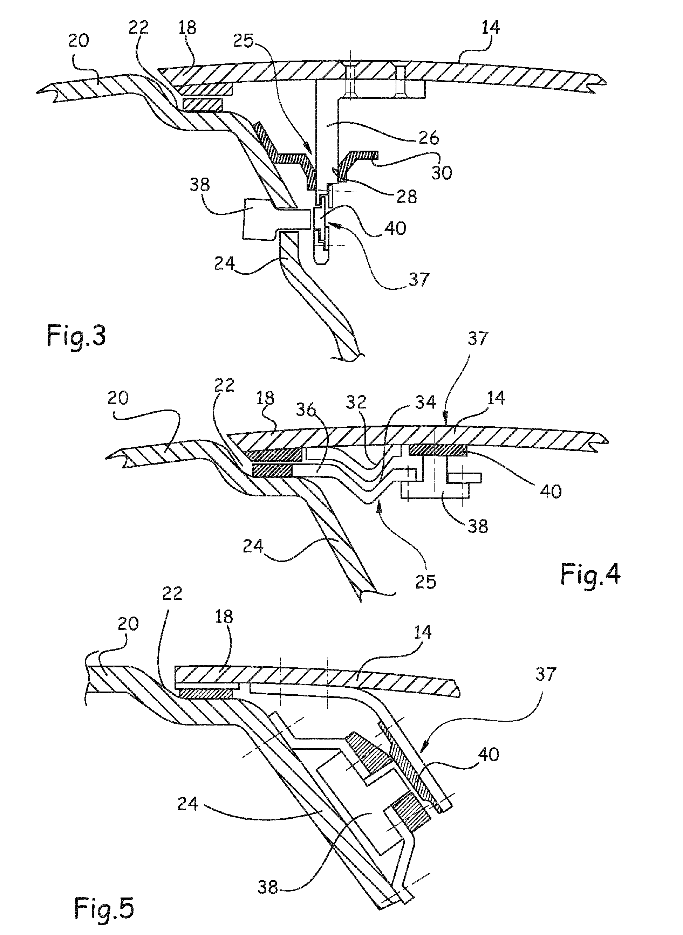

Selon une variante illustrée sur les figures 2 et 3, le capot comprend une forme en saillie 26 appelée couteau qui coopère avec un logement 28 solidaire du reste de la nacelle. Selon un mode de réalisation, le logement 28 se présente sous la forme d'un orifice ménagé dans une plaque 30 solidaire de la paroi 24 délimitant l'ouverture. Le couteau 26 se présente sous la forme d'un cylindre. En fonction de la position du couteau 26 sur le bord amont du capot, ledit couteau 26 a une forme courbe pour coopérer avec l'orifice 28 lors du mouvement de pivotement du capot.

Selon les besoins, le bord amont du capot peut comprendre un ou plusieurs couteaux répartis sur la longueur du bord du capot.

Selon une autre variante illustrée sur la figure 4, le capot peut comprendre une nervure en saillie 32 (avec une section en V par exemple) qui s'étend dans un plan transversal (perpendiculaire à l'axe de pivotement 16) qui coopère avec une gorge 34 avec un profil adapté à celui de la nervure en saillie 32, ménagée au niveau du cadre de l'ouverture. Selon un mode de réalisation, la gorge 34 est ménagée dans une plaque 36 solidaire du reste de la nacelle et notamment du bord amont de l'ouverture.

La nervure 32 peut s'étendre de manière continue sur toute la longueur du bord amont du capot ou se présenter sous la forme d'au moins un tronçon s'étendant sur au moins une partie de la longueur du bord amont du capot.

Selon les variantes illustrées sur les figures 2 à 4, les moyens 25 de positionnement permettent d'assurer le positionnement du capot selon la direction de l'axe de pivotement 16 du capot. L'invention n'est pas limitée à ces modes de réalisation. D'autres solutions sont envisageables pour positionner le capot par rapport à l'ouverture.

Dans tous les cas, pour permettre l'ouverture et la fermeture du capot, les moyens 25 de positionnement n'assurent pas le positionnement du capot par rapport au reste de la nacelle selon une direction correspondant à la direction du mouvement d'ouverture et de fermeture du capot qui correspond sensiblement à la direction radiale. Par conséquent, compte tenu de la distance entre l'axe 16 de pivotement et les moyens 17 de verrouillage/déverrouillage, le capot 14 peut se déformer selon la direction radiale et engendrer un phénomène d'écope.

Pour ne pas altérer ses caractéristiques aérodynamiques, la nacelle comprend des moyens 37 pour limiter la déformation du capot et l'apparition du phénomène d'écope.

Selon l'invention, les moyens 37 pour limiter l'apparition du phénomène d'écope comprennent au moins un couple électromagnétique dont un élément 38 est solidaire du reste de la nacelle et dont l'autre élément 40 est solidaire du capot, au moins l'un des deux éléments émettant un champs magnétique générant un effort d'attraction sur l'autre élément.

Selon un mode de réalisation, le premier élément 38 est un aimant permanent. En variante, le premier élément 38 est un électroaimant qui génère un champs magnétique lorsqu'il est alimenté en électricité. Dans ce cas, les moyens 37 pour limiter l'apparition du phénomène d'écope peuvent être activés ou désactivés. Cette solution est privilégiée car elle permet de ne pas activer les moyens 37 pour limiter l'apparition du phénomène d'écope notamment lorsqu'on souhaite manoeuvrer le capot et de ne les activer que lorsque le capot est à l'état fermé. Avantageusement, l'électroaimant 38 est solidarisé à la partie fixe à savoir le reste de la nacelle.

En complément, le second élément 40 est en matériau magnétique.

Chaque capot 14 comprend au moins un couple électromagnétique. Selon les cas, le capot peut comprendre plusieurs couples électromagnétiques répartis sur la longueur du bord amont du capot. Avantageusement, le ou les couples sont disposés dans les zones susceptibles de voir apparaître les phénomènes d'écope à savoir à proximité des zones correspondant à 3 h ou 9 h ( à mi distance entre l'axe de pivotement et le bord inférieur du capot).

Afin d'optimiser le fonctionnement du couple électromagnétique, il est nécessaire que les deux éléments 38 et 40 soient correctement positionnés l'un par rapport à l'autre.

Selon une première variante, un couple électromagnétique 38, 40 est positionné à proximité des moyens de positionnement.

Selon une première variante illustrée sur la figure 2, les moyens 25 de positionnement comprennent au niveau du capot une platine 42 fixée au capot supportant un couteau 26 et au niveau du reste de la nacelle, une plaque 30 avec un orifice 28, solidarisée par une équerre 44 à la paroi 24 de l'ouverture. Le couple électromagnétique comprend un électroaimant 38 solidarisé à la plaque 30 et une pastille 40 en matériau magnétique solidaire de la platine 42.

Selon une autre variante illustrée sur la figure 3, l'un des éléments du couple électromagnétique est supporté par l'élément en saillie 26 des moyens de positionnement. Ainsi, le couteau 26 supporte une pastille 40 magnétique disposée en regard d'un électroaimant 38 solidarisé à la paroi 24 délimitant l'ouverture.

Selon une autre variante illustrée sur la figure 4, l'élément magnétique 40 sous forme d'une pastille est solidarisé à la face intérieure du capot de manière adjacente à la nervure en saillie 32. En complément, le reste de la nacelle comprend une plaque 36 dans laquelle est ménagée la gorge 34 et supporte l'électroaimant 38. Avantageusement, ladite plaque 36 est reliée au niveau d'un seul bord et comprend une partie en déport. La plaque 36 est réalisée avec une épaisseur et un matériau adaptés pour pouvoir légèrement fléchir et compenser un mauvais positionnement du capot selon la direction radiale.

Afin de positionner correctement les deux éléments du couple électromagnétique l'un par rapport à l'autre, la liaison entre au moins l'un des deux éléments 38, 40 et son support (capot ou reste de la nacelle) autorise un léger débattement qui permet de corriger un léger désalignement.

Comme illustré sur les figures 2 et 3, la pastille 40 peut être disposée dans un logement dont les dimensions sont supérieures à celles de la pastille de manière à ce qu'il subsiste un jeu entre le chant de la pastille et le logement afin que ladite pastille puisse légèrement se déplacer par rapport à son support.

Selon les cas, un couple électromagnétique est disposé à proximité des moyens 25 de positionnement et au moins l'un des deux éléments dudit couple électromagnétique est mobile par rapport à son support.

En variante, au moins l'un des deux éléments d'un couple électromagnétique est mobile par rapport à son support et ledit couple électromagnétique est distant des moyens 25 de positionnement ou un couple électromagnétique est disposé à proximité des moyens 25 de positionnement et les deux éléments dudit couple sont fixes par rapport aux supports.

Selon un autre aspect de l'invention, les faces des deux éléments du couple électromagnétique plaquées l'une contre l'autre sont disposées dans des plans ayant au moins une composante selon la direction radiale.

Cet agencement permet de compenser un éventuel mauvais positionnement des deux éléments selon la direction radiale.

Dans le cas contraire, si les faces des deux éléments sont disposées dans des plans tangentiels et si l'entrefer (distance séparant lesdites faces) est trop important, la force d'attraction entre les deux éléments 38 et 40 peut ne pas être suffisante pour maintenir le capot en position par rapport au reste de la nacelle.

Selon des modes de réalisation illustrés sur les figures 3 et 6, les faces des deux éléments 38 et 40 se faisant face sont disposées dans des plans contenant la direction radiale.

Ainsi, comme illustré sur la figure 6C, même si le capot est mal fermé et que les deux éléments 38 et 40 ne sont pas parfaitement alignés mais légèrement décalés selon la direction radiale, lorsque l'électroaimant est activé, il exerce un effort d'attraction sur la pastille suffisant pour immobiliser le capot et limiter sa déformation et les phénomènes d'écope.

Selon un autre mode de réalisation, comme illustré sur la figure 5, les faces des deux éléments 38 et 40 peuvent être disposées dans des plans inclinés par rapport aux directions radiale et longitudinale. Cette configuration permet de compenser un mauvais alignement des éléments 38 et 40 selon la direction radiale et selon la direction longitudinale.

De préférence, les faces des deux éléments 38 et 40 font un angle inférieur à 60° par rapport à la direction radiale.

## Revendications

1. Nacelle (10) d'aéronef comprenant au niveau de sa paroi extérieure un capot (14) mobile par rapport au reste de la nacelle (10) de manière à obturer ou dégager une ouverture, ledit capot (14) comportant une articulation (15) par rapport au reste de la nacelle (10) et des moyens (17) de verrouillage/déverrouillage distant du bord amont (18) dudit capot (14) qui comprend des moyens (37) pour limiter l'apparition des phénomènes d'écope, **caractérisée en ce que** lesdits moyens (37) pour limiter l'apparition du phénomène d'écope comprennent au moins un couple électromagnétique dont un élément (38) est solidaire du reste de la nacelle (10) et dont l'autre élément (40) est solidaire du capot (14), au moins l'un des deux éléments (38, 40) émettant un champs magnétique générant un effort d'attraction sur l'autre élément et **en ce que** les faces des deux éléments (38, 40) du couple électromagnétique plaquées l'une contre l'autre sont disposées dans des plans ayant au moins une composante selon la direction radiale.

2. Nacelle d'aéronef selon la revendication 1, **caractérisée en ce que** les faces des deux éléments (38, 40) font un angle inférieur à 60° par rapport à la direction radiale.

3. Nacelle d'aéronef selon la revendication 1 ou 2, **caractérisée en ce que** l'un des deux éléments du couple électromagnétique (38, 40) est un électroaimant.

4. Nacelle d'aéronef selon la revendication 3, **caractérisée en ce que** l'électroaimant est supporté par le reste de la nacelle (10).

5. Nacelle d'aéronef selon l'une quelconque des revendications précédentes, **caractérisée en ce qu'**au moins un des deux éléments (38, 40) d'un couple électromagnétique est mobile par rapport à son support.

6. Nacelle d'aéronef comprenant au niveau de sa paroi extérieure un capot (14) comportant des moyens (25) de positionnement au niveau de son bord amont (18) selon l'une quelconque des revendications précédentes, **caractérisée en ce qu'**un couple électromagnétique est disposé à proximité des moyens (25) de positionnement.

7. Nacelle d'aéronef selon la revendication 6, **caractérisée en ce que** les moyens (25) de positionnement comprennent au niveau du capot (14) une platine (42) fixée au capot (14) supportant un élément en saillie (26, 32) qui se loge dans un élément en creux solidaire du reste de la nacelle (10) et qui supporte une pastille (40) en matériau magnétique.
